# EUROPÄISCHE PATENTANMELDUNG

(11) **EP 1 331 057 A1**
(43) Veröffentlichungstag der Anmeldung: **30.07.2003**
(21) Anmeldenummer: 02001133.4
(22) Anmeldetag: 25.01.2002
(51) Int. Cl.: B23K 9/133

(54) **Drahtvorschubvorrichtung für Drahtschweissanlage**

(71) Anmelder: Mechafin AG, 8954 Geroldswil (CH)
(72) Erfinder: Hess, Andreas, 6208 Oberkirch (CH)
(74) Vertreter: Blum, Rudolf Emil Ernst

(57) **Zusammenfassung**

Die Drahtvorschubvorrichtung besitzt eine erste Rolle (2) und zwei weitere Rollen (3). Der Schweissdraht (1) ist zwischen der ersten Rolle (1) und den weiteren Rollen (2) geführt. Die erste Rolle (2) hat einen Antrieb. Die weiteren Rollen (3) sind mit einer Wippe (5) gelagert. Die Lagerung mit der Wippe (5) dient dazu, die von einem Hebel (6) auf die Wippenachse (8) übertragene Kraft einer Federschraube (14) gleichmässig auf die beiden weiteren Rollen (3) zu verteilen. Aufgrund der Verteilung kann die summierte Andruckkraft grösser gewählt werden als bei einer konventionellen Vorrichtung, bei der die Andruckkraft von nur einer Rolle auf den Draht ausgeübt wird. Der Aufbau mit zwei weiteren Rollen (3) hat zudem den Vorteil einer grösseren Kontaktstrecke des Schweissdrahtes (1) entlang der ersten Rolle (2). Die Kraftübertragung von der ersten Rolle (2) auf den Schweissdraht (1) wird verbessert.

## Beschreibung

Die Erfindung bezieht sich auf eine Drahtvorschubvorrichtung für Drahtschweissanlagen gemäss Oberbegriff der unabhängigen Ansprüche.

Vorrichtungen dieser Art, wie sie z.B. in WO 98/26895 beschrieben sind, werden beim Drahtschweissen verwendet, um den Schweissdraht von der Spule abzuwickeln und z.B. über ein Schlauchpaket dem Schweissbrenner zuzuführen. Die Vorrichtungen besitzen mindestens zwei Rollen, zwischen denen der Draht führbar und antreibbar ist. Es können eine, oder aber auch beide Rollen eines solchen Rollenpaars angetrieben sein. Meistens wirkt auf mindestens eine der beiden Rollen eine Federkraft. Die Rolle erhält dadurch die Funktion einer Andruckrolle, die eine Andruckkraft auf den Draht ausübt. Die Vorrichtung kann auch zwei oder mehr hintereinander angeordnete Rollenpaare aufweisen, wobei mehrere Rollenpaare zusammen eine grössere Vorschubkraft auf den Draht ausüben können. Der Aufbau mit mehr Rollenpaaren braucht jedoch mehr Platz und ist bei Herstellung, Betrieb und Wartung wesentlich teurer als entsprechende Vorrichtungen mit einem Rollenpaar. Zusätzliche Antriebsrollen erfordern insbesondere zusätzliche Antriebsverbindungen. Die Drahtvorschubvorrichtung wird dadurch grösser und schwerer, was z.B. für die Montage auf einem Roboterarm ungünstig ist.

Es stellt sich daher die Aufgabe, eine Vorrichtung der eingangs genannten Art mit grösserer Vorschubleistung bereitzustellen, die die oben genannten Nachteile zumindest teilweise vermeidet.

Diese Aufgabe wird von Anspruch 1 gelöst, indem die Vorrichtung mindestens eine Gruppe mit mindestens drei Rollen aufweist. Eine erste Rolle der Gruppe bildet dabei mit mindestens zwei weiteren Rollen der Gruppe jeweils ein Rollenpaar, zwischen dem der Draht geführt ist. Dies hat den Vorteil, dass der Schweissdraht im Vergleich zum konventionellen Aufbau mit Gruppen von nur zwei Rollen über eine längere Strecke mit der ersten Rolle der Gruppe in Kontakt steht. Zudem wird im Gegensatz zum konventionellen Aufbau bei der erfindungsgemässen Vorrichtung die Andruckkraft auf mindestens zwei Orte verteilt. Es wird so eine bessere Kraftübertragung bzw. eine bessere Schlupfverminderung möglich. Die Antriebsleistung kann wesentlich höher gewählt werden und es wird eine höhere Beschleunigung erreicht. Durch die Verteilung der Andruckkraft wird zudem eine Deformation des Drahtes zumindest teilweise vermieden.

Eine weitere Verbesserung ergibt sich, wenn die weiteren Rollen der Gruppe mit einer Wippe gelagert werden. Dies hat den Vorteil, dass die Andruckkraft gleichmässig auf die Rollen verteilt wird.

Es stellt sich desweiteren die Aufgabe verschiedenartige Drahtvorschubvorrichtungen, unter anderem der oben genannten Art, so auszugestalten, dass deren Herstellung möglichst kostengünstig ist.

Diese Aufgabe wird gelöst, indem die Drahtvorschubvorrichtung so ausgestaltet wird, dass sie mit einem beliebigen Andruckmittel bestückbar ist. Wesentliche Teile der Vorrichtung, wie zum Beispiel das Gehäuse, sind somit von der Art des Andruckmittels unabhängig und können in grösseren Stückzahlen gefertigt werden. Das Andruckmittel kann dabei ein oder mehrere Andruckrollen aufweisen. Ein erstes Andruckmittel umfasst eine einzelne Andruckrolle. Ein weiteres Andruckmittel umfasst eine Wippe mit zwei Andruckrollen.

Weitere Vorteile und bevorzugte Ausführungsbeispiele ergeben sich aus den abhängigen Ansprüchen, sowie aus der nun folgenden Beschreibung anhand der Figuren. Dabei zeigen:
Fig. 1 eine Drahtvorschubvorrichtung in einer Ausführung mit einer Gruppe von drei Rollen, eine erste Rolle ausgestaltet als Antriebsrolle, und zwei weitere Rollen ausgestaltet als Andruckrollen, mit einer Wippe gelagert (Seitenansicht),
Fig. 2 die Drahtvorschubvorrichtung aus Fig. 1 in einem Schnitt entlang Linie II-II von Fig. 1,
Fig. 3 eine Drahtvorschubvorrichtung in einer Ausführung mit einer Gruppe von drei Rollen, mit tangentialer Draht Zu- und Wegfuhr,
Fig. 4 eine Drahtvorschubvorrichtung in einer Ausführung mit einer Gruppe von vier Rollen.
Fig. 5 eine Drahtvorschubvorrichtung in einer Ausführung mit einer Gruppe von fünf Rollen.
Fig. 6 eine Drahtvorschubvorrichtung in einer Ausführung mit zwei Gruppen von je drei Rollen,
Fig. 7a eine Drahtvorschubvorrichtung in einer Ausführung bestückt mit einem Andruckmittel umfassend eine einzelne Andruckrolle,
Fig. 7b die Drahtvorschubvorrichtung von Fig. 7a in einer Ausführung bestückt mit einem Andruckmittel umfassend eine Wippe mit zwei Andruckrollen.

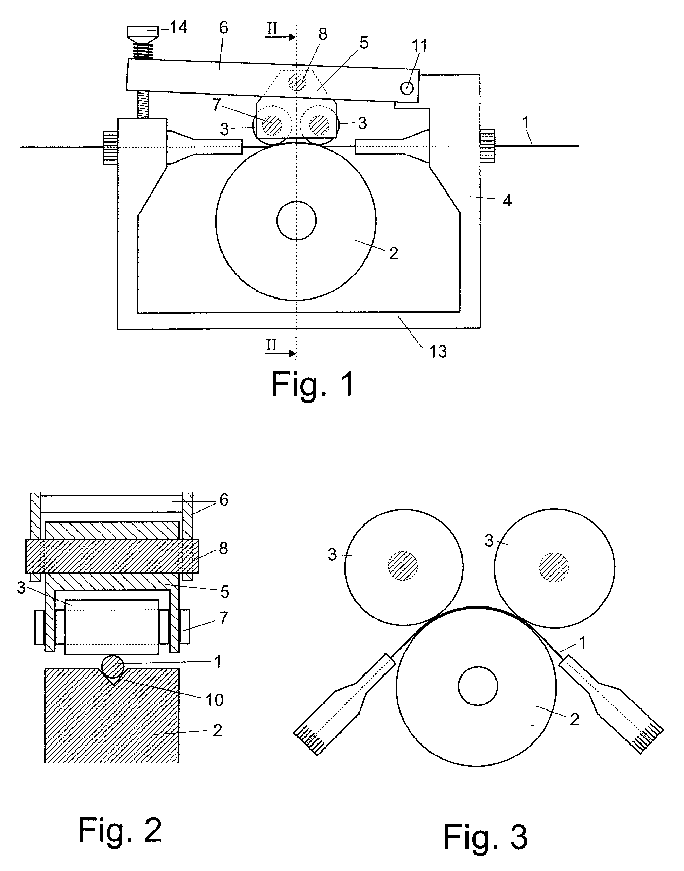

Fig. 1 zeigt eine Ausführung der Drahtvorschubvorrichtung mit einer Gruppe von Rollen 2, 3, umfassend eine erste Rolle 2 und weitere Rollen 3. In der bevorzugten Ausführungsform ist die erste Rolle 2 als angetriebene Antriebsrolle ausgestaltet und die weiteren Rollen 3 sind als freilaufende Andruckrollen ausgestaltet. Der Antrieb der ersten Rolle 2 ist nicht gezeigt. Die beiden weiteren Rollen 3 sind über Achse 7 in einer Wippe 5 gelagert. Die Wippe 5 ist ihrerseits schwenkbar über eine Wippenachse 8 mit einem Hebel 6 verbunden. Der Hebel 6 ist an einem Ende in einer Hebelachse 11 schwenkbar an einem Gehäuse 4 der Vorrichtung befestigt. Am anderen Ende wird er von einer Schraubenfeder 14 gegen die erste Rolle 2 gedrückt. Dieser Aufbau führt dazu, dass die Andruckkraft ausgehend von der Federschraube 14 über den Hebel 6 gleichmässig auf die beiden weiteren Rollen 3 verteilt ist. Der Hebel 6 verstärkt die Andruckkraft der Federschraube 14 entsprechend dem Hebelgesetz. Der Aufbau mit Federschraube 14 und Hebel 6 hat den Vorteil, dass die Andruckkraft genau eingestellt werden kann, so dass der Schweissdraht einerseits nicht beschädigt wird, andererseits jedoch keinen Schlupf hat. Der Hebel 6 ist zum Einziehen des Schweissdrahtes 1 oder zur Reinigung der Vorrichtung wegklappbar. Die Rollen 2, 3 sind aus Stahl oder weisen Stahl auf, dies insbesondere im Bereich, der mit dem Schweissdraht 1 in Kontakt steht. Stahl hat den Vorteil, dass der Verschleiss gering ist. Die Rollenachsen 7 der Rollen 3 ohne Antrieb können insbesondere mit einem selbstschmierenden Sinterlager, z.B. aus Bronze, ausgestattet sein. Im Gegensatz zu Kugellagern gibt es bei Sinterlagern keine Standschäden. Sie sind im wesentlichen wartungsfrei und haben einen ruhigen Lauf.

Die erste Rolle 2 der Gruppe hat einen grösseren Durchmesser als die weiteren Rollen 3 der Gruppe. Die weiteren Rollen 3 der Gruppe sind in geringem Abstand voneinander angeordnet. Sie sind vorzugsweise so dimensioniert und angeordnet, dass der resultierende Umschlingungswinkel des Drahtes um die erste Rolle 2 der Gruppe kleiner als 45° ist. Aufgrund eines derartigen kleinen Umschlingungswinkels des Drahtes 1 um die erste Rolle 2 der Gruppe ist es möglich, den Draht 1 im wesentlichen nur in einer Richtung, bevorzugt koaxial und parallel zur Gehäusegrundfläche 13, durch die Vorrichtung zu führen. Unter koaxial wird dabei verstanden, dass die Achse des Schweissdrahtes 1 vor und nach der Rolle auf einer gemeinsamen Linie liegt. Der Draht 1 erfährt im wesentlichen keine Ablenkung. Dies vereinfacht das Einziehen des Drahtes. Ausserdem erleichtert eine zur Gehäusegrundfläche 13 parallele und insbesondere koaxiale Zu- und Wegfuhr des Drahtes 1 die Integration der Drahtvorschubvorrichtung in bestehende Schweissvorrichtungen.

Fig. 2 zeigt die Ausführung aus Fig. 1 in einem Schnitt senkrecht zum Schweissdraht 1. Der Schweissdraht 1 ist von der weiteren Rolle 3 in einer Führungsnut 10, vorzugsweise einer V-Nut, gehalten. Die Führungsnut 10 dient der seitlichen Führung des Schweissdrahtes 1. Die Verwendung einer V-Nut erlaubt den Betrieb mit verschiedenen Drahtdurchmessern, ohne die Antriebsrolle zu wechseln.

In der bevorzugten Ausführungsform ist die erste Rolle 2 als Antriebsrolle ausgestaltet und die weiteren Rollen 3 als Andruckrollen. Die weiteren Rollen 3 können jedoch auch als kombinierte Antriebs- und Andruckrollen ausgestaltet werden, so dass insgesamt eine noch grössere Vorschubkraft auf den Draht 1 ausgeübt werden kann.

Fig. 3 zeigt eine Ausführung der Drahtvorschubvorrichtung mit einer Gruppe von Rollen, umfassend eine erste Rolle 2, und weitere Rollen 3. Der Draht 1 ist der ersten Rolle 3 tangential zugeführt und wird tangential von ihr weggeführt. Dies hat den Vorteil, dass der Schweissdraht 1 nur einmal, und nur in einer Richtung umgelenkt wird, und dass das Material des Schweissdrahtes 1, aber auch das Material der Rollen 2 bzw. 3, entsprechend weniger beansprucht wird, als z.B. bei koaxialer Zu- und Wegfuhr mit dreimaliger Umlenkung, wie bei der in Fig. 1 dargestellten Ausführungsform. Allerdings hat die dreifache Umlenkung der Ausführungsform in Fig. 1 den Vorteil, dass der Draht nach dem Verlassen der Vorschubvorrichtung durch die Gegen- bzw. Rückbiegung schlussendlich wieder im Wesentlichen gerade ist, während bei der in Fig. 3 dargestellten Biegung nur in einer Richtung der Draht nach dem Durchlauf durch die Vorrichtung eine leichte Krümmung aufweisen kann.

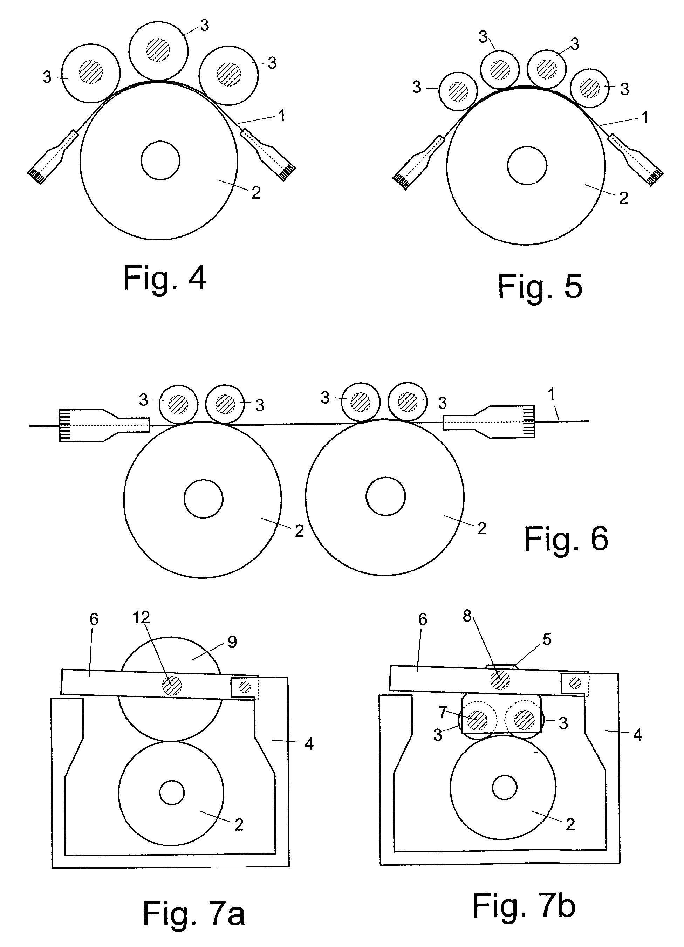

Fig. 4 zeigt eine Ausführungsform der Drahtvorschubvorrichtung mit einer Gruppe von vier Rollen umfassend eine erste Rolle 2 mit einem Antrieb, und drei weitere Rollen 3, die den Draht 1 an die erste Rolle 2 andrücken. Drei, vier oder mehr weitere Rollen 3 haben den Vorteil, dass insgesamt eine noch grössere Andruckkraft auf den Schweissdraht 1 ausgeübt werden kann, als bei Vorrichtungen mit zwei weiteren Rollen 3. Die weiteren Rollen 3 werden bevorzugt in geringem Abstand von einander angeordnet, so dass entweder möglichst viele weitere Rollen 3 entlang des Umschlingungsbogens um die erste Rolle 2 plaziert werden können, oder aber dass ein grösserer Durchmesser für die weiteren Rollen 3 gewählt werden kann. In beiden Fällen wird eine bessere Verteilung der Andruckkraft erreicht. Dies wiederum bedeutet, dass die maximale Andruckkraft, d.h. die Kraft, bei der der Draht 1 gerade nicht beschädigt wird, grösser gewählt werden kann.

Fig. 5 zeigt eine Ausführungsform wie in Fig. 4, jedoch mit einer Gruppe mit insgesamt fünf Rollen 2, 3. Die erste Rolle 2 hat die Funktion einer Antriebsrolle, die weiteren Rollen 3 haben die Funktion von Andruckrollen.

Fig. 6 zeigt eine Ausführungsform der Drahtvorschubvorrichtung mit zwei Gruppen von Rollen. Jede Gruppe weist eine erste Rolle 2 und zwei weitere Rollen 3 auf. Der Aufbau mit zusätzlichen Gruppen von Rollen ermöglicht eine Steigerung der Vortriebsleistung. Der Draht 1 ist im wesentlichen durchgehend in derselben Richtung geführt. Dies vereinfacht das Einziehen des Drahtes 1 und schont das Material des Drahtes 1, weil der Draht 1 nur eine geringe Umlenkung erfährt.

Fig. 7a und 7b zeigen eine Drahtvorschubvorrichtung in zwei verschiedenen Bestückungsvarianten, wobei jeweils ein anderes Andruckmittel aus einem Satz von verschieden Andruckmitteln gewählt wurde. Fig. 7a zeigt eine Drahtvorschubvorrichtung bestückt mit einem ersten Andruckmittel, nämlich einer Andruckrolle 9 mit Andruckrollenachse 12. Fig. 7b zeigt dieselbe Drahtvorschubvorrichtung wie Fig. 7a, jedoch bestückt mit einem zweiten Andruckmittel, nämlich einer Wippe 5 mit Wippenachse 8 und zwei Andruckrollen 3 mit Andruckrollenachsen 7. Andruckrollenachse 12 des ersten Andruckmittels und Wippenachse 8 des zweiten Andruckmittels haben im Bereich des Hebels 6 denselben Durchmesser. Bis auf das Andruckmittel 9, 12 bzw. 3, 5, 7, 8 sind die Drahtvorschubvorrichtungen aus Fig. 7a und 7b identisch. Dies hat den Vorteil, das die Herstellungskosten gesenkt werden können, weil insgesamt weniger verschiedene Teile hergestellt werden müssen. Ein weiterer Vorteil besteht darin, dass die Andruckmittel auch nach der Herstellung noch ausgetauscht werden können.

## Patentansprüche

1. Drahtvorschubvorrichtung für Drahtschweissanlagen mit Rollen (2, 3), zwischen denen ein Schweissdraht (1) führbar ist, **dadurch gekennzeichnet, dass** mindestens ein Teil der Rollen (2, 3) in mindestens einer Gruppe mit mindestens drei Rollen (2, 3) angeordnet ist, wobei eine erste Rolle (2) der Gruppe mit mindestens zwei weiteren Rollen (3) der Gruppe jeweils ein Rollenpaar bildet, zwischen dem der Schweissdraht (1) führbar ist.

2. Drahtvorschubvorrichtung gemäss Anspruch 1, **dadurch gekennzeichnet, dass** die erste Rolle (2) der Gruppe angetrieben ist.

3. Drahtvorschubvorrichtung gemäss Anspruch 1, **dadurch gekennzeichnet, dass** mindestens eine der weiteren Rolle (2) der Gruppe angetrieben ist.

4. Drahtvorschubvorrichtung gemäss einem der vorangehenden Ansprüche, **dadurch gekennzeichnet, dass** die weiteren Rollen (3) der Gruppe, insbesondere mit Federkraft, gegen die erste Rolle (2) der Gruppe gedrückt sind.

5. Drahtvorschubvorrichtung gemäss einem der vorangehenden Ansprüche, **dadurch gekennzeichnet, dass** die Vorrichtung mindestens eine Gruppe mit drei, vier oder fünf Rollen (3) aufweist.

6. Drahtvorschubvorrichtung gemäss einem der vorangehenden Ansprüche, **dadurch gekennzeichnet, dass** die Vorrichtung zwei oder mehr Gruppen von Rollen (2, 3) aufweist.

7. Drahtvorschubvorrichtung gemäss einem der vorangehenden Ansprüche, **dadurch gekennzeichnet, dass** zwei der weiteren Rollen (3) der Gruppe mit einer Wippe (5) gelagert sind, welche eine Wippenachse (8) zur Übertragung einer Andruckkraft aufweist, und welche insbesondere so ausgestaltet ist, dass beide weiteren Rollen (3) mit derselben Andruckkraft auf den Schweissdraht (1), bzw. die erste Rolle (2) der Gruppe wirken.

8. Drahtvorschubvorrichtung gemäss Anspruch 7, **dadurch gekennzeichnet, dass** die Wippe (5) über die Wippenachse (8) beweglich an einem Hebel (6) befestigt ist, dass der Hebel (6) mit einer Hebelachse (11) beweglich an einem Gehäuse (4) der Drahtvorschubvorrichtung befestigt ist, und dass eine auf das der Hebelachse (11) gegenüberliegende Ende des Hebels (6) wirkende Kraft, insbesondere einer Schraubenfeder (14), entsprechend dem Hebelgesetz verstärkt auf die Wippenachse (8) wirkt.

9. Drahtvorschubvorrichtung gemäss einem der vorangehenden Ansprüche, **dadurch gekennzeichnet, dass** der Schweissdraht (1) der ersten Rolle (2) der Gruppe im wesentlichen tangential an die erste Rolle (2) zuführbar und/oder von der ersten Rolle (2) im wesentlichen tangential an die erste Rolle (2) wegführbar ist.

10. Drahtvorschubvorrichtung gemäss einem der vorangehenden Ansprüche, **dadurch gekennzeichnet, dass** sie ausgestaltet ist zum parallelen, insbesondere koaxialen, Zu- und Wegführen des Schweissdrahtes (1), insbesondere in einer Richtung parallel zu einer Gehäusegrundfläche (13).

11. Drahtvorschubvorrichtung gemäss einem der vorangehenden Ansprüche, **dadurch gekennzeichnet, dass** die erste Rolle (2) der Gruppe einen grösseren Durchmesser hat als die weiteren Rollen (2) der Gruppe.

12. Drahtvorschubvorrichtung gemäss einem der vorangehenden Ansprüche, **dadurch gekennzeichnet, dass** der Umschlingungswinkel des Schweissdrahtes (1) um die erste Rolle (2) der Gruppe kleiner als 45° ist.

13. Drahtvorschubvorrichtung gemäss einem der vorangehenden Ansprüche, **dadurch gekennzeichnet, dass** die erste Rolle (2) der Gruppe oder die weiteren Rollen (3) der Gruppe eine Führungsnut (10) für den Schweissdraht (1) aufweisen, insbesondere eine V-Nut.

14. Drahtvorschubvorrichtung gemäss einem der vorangehenden Ansprüche, **dadurch gekennzeichnet, dass** mindestens eine der Rollen (2, 3), insbesondere eine Rolle, die keinen Antrieb hat, mit einem Sinterlager gelagert ist, wobei das Sinterlager insbesondere Bronze aufweist und selbstschmierend ist.

15. Drahtvorschubvorrichtung für Drahtschweissanlagen mit einem Satz von Andruckmitteln, wobei die Drahtvorschubvorrichtung Rollen (2, 3, 9) aufweist, zwischen welchen der Schweissdraht (1) führbar ist, wobei ein Teil der Rollen (2, 3, 9) zu Andruckmitteln gehören, über welche eine Andruckkraft auf den Schweissdraht (1) ausübbar ist, **dadurch gekennzeichnet, dass** ein erstes Andruckmittel (9, 12) eine einzige Rolle (9) umfasst, und ein zweites Andruckmittel (3, 5, 7, 8) eine Wippe (5) mit zwei Rollen (3) umfasst, wobei beide Rollen (3) der Wippe (5) den Schweissdraht (1) an dieselbe Rolle (2) drücken.
